Europäisches Patentamt

European Patent Office

Office européen des brevets

(11) Publication number: **0 137 261**
**B1**

# (12) EUROPEAN PATENT SPECIFICATION

(45) Date of publication of patent specification: **07.12.88**

(21) Application number: **84110088.6**

(22) Date of filing: **23.08.84**

(51) Int. Cl.⁴: **B 22 D 19/14,** F 16 C 7/00

(54) **Internal combustion engine light metal connecting rod assembly reinforced with loops of fiber, and method for manufacturing the same.**

(30) Priority: **26.08.83 JP 156116/83**
**17.10.83 JP 193770/83**

(43) Date of publication of application:
**17.04.85 Bulletin 85/16**

(45) Publication of the grant of the patent:
**07.12.88 Bulletin 88/49**

(84) Designated Contracting States:
**DE FR GB**

(56) References cited:
**EP-A-0 019 494**
**FR-A-2 502 036**
**US-A-3 056 167**
**PATENTS ABSTRACTS OF JAPAN, vol. 7, no.**
**193(M-238)(1338), 24th August 1983; & JP - A -**
**58 94621 (TOYOTA JIDOSHA KOGYO K.K.)**
**04-06-1983**
**PATENTS ABSTRACTS OF JAPAN, vol. 7, no.**
**193(M-238)(1338), 24th August 1983; & JP - A -**
**58 94620 (TOYOTA JIDOSHA KOGYO K.K.)**
**04-06-1983**

(73) Proprietor: **TOYOTA JIDOSHA KABUSHIKI KAISHA**
**1, Toyota-cho Toyota-shi**
**Aichi-ken 471 (JP)**

(72) Inventor: **Donomoto, Tadashi c/o TOYOTA JIDOSHA K.K.**
**1, Toyota-cho**
**Toyota-shi Aichi-ken (JP)**
Inventor: **Tanaka, Atsuo c/o TOYOTA JIDOSHA K.K.**
**1, Toyota-cho**
**Toyota-shi Aichi-ken (JP)**
Inventor: **Akai, Tugio c/o TOYOTA JIDOSHA K.K.**
**1, Toyota-cho**
**Toyota-shi Aichi-ken (JP)**

(74) Representative: **Grams, Klaus Dieter, Dipl.-Ing. et al**
**Patentanwaltsbüro Tiedtke-Bühling-Kinne-Grupe-Pellmann-Grams-Struif Winter-Roth**
**Bavariaring 4**
**D-8000 München 2 (DE)**

Courier Press, Leamington Spa, England.

## Description

### Background of the invention

The present invention relates to a connecting rod assembly for an internal combustion engine, which is made of composite reinforced material, and more particularly relates to such a connecting rod which is made of light matrix metal reinforced by long reinforcing fibers arranged in a particular way, according to the preamble of claim 1, and to a method of manufacturing this connecting rod according to the preamble of claim 9.

A connecting rod for an internal combustion engine is in general composed of a big end portion (usually made up of two semicircular portions bolted together, cut apart from a rod preform) which defines a big end hole for rotatably receiving a crank pin, a small end portion which defines a small end hole for rotatably receiving a piston pin, and an arm portion joining between the big end portion and the small end portion. Such connecting rods are usually made of forged steel such as carbon steel. Since such a connecting rod made of steel is quite heavy in weight, and since reduction of the weight of the connecting rods of an internal combustion engine while maintaining their strength and durability is not only important for reducing the weight of the engine as a whole but is more particularly important for reducing the reciprocating mass of the connecting rod and piston combinations of the engine and for thus allowing higher engine revolution speeds which are effective for promoting engine power output and fuel economy, various attempts have been made in the past to manufacture connecting rods out of light weight metal such as aluminum alloys. Further, attempts have been made to reinforce such light weight metal connecting rods by composite reinforcing material such as reinforcing fibers, for example alumina fibers, so as to employ the metal of the connecting rods as a matrix metal.

From JP—A—58-94621 a light weight metal connecting rod according to the preamble of claim 1 is known. A similar connecting rod is disclosed in FR—A—2502036 where additionally a method for manufacturing this rod according to the preamble of claim 9 is described.

However, in such prior art types of composite reinforced light metal connecting rod, either the reinforcing fibers have been provided only in the arm portion of the connecting rod (FR—A—2502036), or they have been additionally provided in only certain portions of the big end portion and the small end portion of the connecting rod where it is envisaged that the greatest added strength will be required (JP—A—58-94621). This means that in the neighborhood of the boundaries between the reinforced portions of the rod and the non reinforced portions zones of weakness are created in which stresses and strains are concentrated. The rigidity is poor in these zones, and thus risk exists of the connecting rod becoming deformed and breaking near them during use, or at the very least undergoing distortion such as deterioration of the circularity of the big end hole and/or the small end hole, which can lead to rapid wear of the bearings fitted therein, additional friction and heat being generated therein during engine operation, and possibly to premature failure of the engine as a whole. This tendency is aggravated by the fact that the thermal deformation properties of the composite reinforced portions and of the non composite reinforced portions of the connecting rod are substantially different, which means that the repeated thermal stresses to which the connecting rod is inevitably subjected during use add to this deformation and distortion, as well as weakening further the already weak zones.

Another problem that arises is that, during manufacture of such a fiber reinforced metal type connecting rod which is composite reinforced, which is typically done by infiltrating molten matrix metal into a casting mold shaped internally as the preform of the connecting rod and containing inserts of fiber located therein in appropriate places for composite reinforcement, since the matrix metal is required to be infiltrated at very high pressure into the interstices of the reinforcing fiber mass which are very fine, there is a great danger of this infiltrating matrix metal displacing the reinforcing fiber inserts from their proper positions in the casting mold. This can cause the finished connecting rods not to be composite reinforced in the correct places, thus causing unevenness in quality and difficulty in efficiently manufacturing connecting rods of a desired quality.

An important consideration in the design of such a connecting rod is to maintain a low ratio or balance of the weight of the small end portion to the weight of the connecting rod as a whole. This is because, as well known to those of skill in the engine design art, an amount of extra weight near the small end portion of the connecting rod affects the effective reciprocating weight of the connecting rod and piston combination considerably more than an equivalent amount of extra weight nearer the big end portion of the rod, due to the more linear path of travel of the small end portion. Further, it is important to make the small end portion of the rod physically small, in view of construction limitations for the piston, especially in the case of a piston which is formed with a piston crown depression, in which the clearance available between the bottom of said piston crown depression and the small end of the connecting rod may be quite small.

### Summary of the invention

Accordingly, it is the primary object of the present invention to provide a composite reinforced connecting rod made of matrix metal and reinforcing fibers, which avoids the above mentioned problems.

It is a further object of the present invention to provide such a composite reinforced connecting rod, which is light.

It is a further object of the present invention to provide such a composite reinforced connecting rod, which is strong.

It is a further object of the present invention to provide such a composite reinforced connecting rod, which is durable.

It is a further object of the present invention to provide such a composite reinforced connecting rod, which is not liable to failure during use.

It is a further object of the present invention to provide such a composite reinforced connecting rod, which does not risk causing distortion of its big end hole and its small end hole during use.

It is a further object of the present invention to provide such a composite reinforced connecting rod, which does not risk causing failure of the bearings fitted to its big end hole and to its small end hole failure during use.

It is a further object of the present invention to provide such a composite reinforced connecting rod, which has sufficient evenness in its strength and its thermal properties.

It is a further object of the present invention to provide such a composite reinforced connecting rod, which does not have any particularly weaker portions or zones of concentration of stress, strain or thermal deformation.

It is a further object of the present invention to provide such a composite reinforced connecting rod, which is easy to make.

It is a further object of the present invention to provide such a composite reinforced connecting rod, which is cheap to make.

It is a further object of the present invention to provide such a composite reinforced connecting rod, which can be reliably and easily mass produced without danger of unacceptable quality variations.

It is further object of the present invention to provide such a composite reinforced connecting rod, which can be mass produced without any danger occurring of the composite reinforcing material becoming located in the wrong portions of the rod.

It is a yet further object of the present invention to provide such a composite reinforced connecting rod, which has a low ratio of the weight of its small end portion to the weight of its big end portion. .          .

It is a yet further object of the present invention to provide such a composite reinforced connecting rod, which has low effective reciprocating weight.

It is a yet further object of the present invention to provide such a composite reinforced connecting rod, which can be used in engines which operate at high revolution speed.

It is a yet further object of the present invention to provide such a composite reinforced connecting rod, which can be used in high power output engines.

It is a yet further object of the present invention to provide such a composite reinforced connecting rod, which has a small end portion reduced in physical size, with a good clearance being available between said small end portion of the connecting rod and the crown surface of a piston fitted to said rod.

It is a yet further object of the present invention to provide a preform for such a composite reinforced connecting rod.

It is a yet further object of the present invention to provide a method of manufacturing such a composite reinforced connecting rod.

According to the most general aspect of the present invention, these and other objects as regards the connecting rod assembly are accomplished by the features as indicated in the characterizing portion of claim 1. An advantageous method of manufacturing is indicated in claim 9.

According to such a structure for the connecting rod assembly, and to such a method of making it, a reinforced connecting rod can be made which is light yet strong and durable, because no boundaries between reinforced and non-reinforced portions are present adjacent to or within the big end portion or the small end portion, and thus no particular unevenness in the rigidity or the thermal deformation characteristics of these portions are present; and thereby the various problems such as weakness deformation described above caused by such unevenness are obviated. Particularly, since conveniently the reinforcing fiber bundles may be made to occupy almost all of the space of the connecting rod mold before infiltrating the molten matrix metal thereinto, these bundles will not be able to move substantially during the casting process, and thus problems of locating them within the mold cavity to not occur. Accordingly, it becomes possible to manufacture by mass production connecting rod assemblies of this composite reinforced cost at a reasonable cost and with a high degree of repeatable quality.

Brief description of the drawings

The present invention will now be shown and described with reference to the preferred embodiments thereof, and with reference to the illustrative drawings. It should be clearly understood, however, that the description of the embodiments, and the drawings, are all of them given purely for the purposes of explanation and exemplification only, and are none of then intended to be limitative of the scope of the present invention in any way, since the scope of the present invention is to be defined solely by the legitimate and proper scope of the appended claims. In the drawings, like parts and features are denoted by like reference symbols in the various figures thereof, and:

Fig. 1 is a schematic longitudinal sectional view through a first preferred embodiment of the fiber reinforced connecting rod according to the present invention which utilizes in its manufacture a pair of main loops, a pair of big end loops, and a pair of small end loops, all composed of reinforcing fiber, said view being actually taken in several different planes which are spaced apart but are all parallel to the longitudinal axis of said connecting rod and perpendicular to the axial lines of the big end hole and of the small end hole thereof;

Fig. 2 is a sectional view through the connecting rod of Fig. 1, taken in a plane indicated by the arrows II—II of Fig. 1;

Fig. 3 is a perspective view of a reinforcing fiber main loop, of which a pair are used in making this first embodiment of the present invention and are shown in Figs. 1 and 2;

Fig. 4 is a perspective view of a reinforcing fiber big end loop, of which again a pair are used in making this first embodiment of the present invention and are shown in Figs. 1 and 2;

Fig. 5 is a perspective view of a reinforcing fiber small end loop, of which again a pair are used in making this first embodiment of the present invention and are shown in Figs. 1 and 2;

Fig. 6 is a perspective view of a half of a casting case, for receiving the reinforcing fiber loops of which samples are shown in Figs. 3, 4, and 5, and in which the connecting rod is to be cast;

Fig. 7 is an exploded perspective view, showing how the casting case of which a half is shown in Fig. 6 is loaded with two each of the reinforcing fiber loops shown in Figs. 3, 4, and 5, and is assembled for the casting process;

Fig. 8 is a sectional view showing the practicing of the casting process for infiltrating molten metal into the interstices of the fiber mass within the casting case of Fig. 8 under high pressure, to form a preform according to the first preferred embodiment of the present invention for the connecting rod of Figs. 1 and 2;

Fig. 9 is a schematic sectional view, taken in a manner similar to Fig. 1, through a conventional type of fiber reinforced connecting rod, used as a prior art example for comparison;

Fig. 10 is a schematic longitudinal sectional view through a second preferred embodiment of the fiber reinforced connecting rod according to the present invention, taken in several different planes in the same way as Fig. 1 and corresponding to Fig. 1, said second preferred embodiment in addition using in its construction a reinforcing fiber connecting rod reinforcement bundle;

Fig. 11 is a sectional view through the connecting rod of Fig. 10, taken in a plane indicated by the arrows XI—XI of Fig. 10, in the same was as and corresponding to Fig. 2 relating to the first preferred embodiment;

Fig. 12 is a perspective view of said reinforcing fiber rod reinforcement bundle used in making this second preferred embodiment; and

Fig. 13 is an exploded perspective view, corresponding to Fig. 7 with respect to the first preferred embodiment, showing how, in the second preferred embodiment, the casting case is loaded with two each of certain reinforcing fiber loops and also with the connecting rod reinforcement bundle shown in Fig. 12, and is assembled for the casting process.

## Description of the preferred embodiments

The present invention will now be described with reference to the preferred embodiments thereof, and with reference to the appended drawings.

### First embodiment

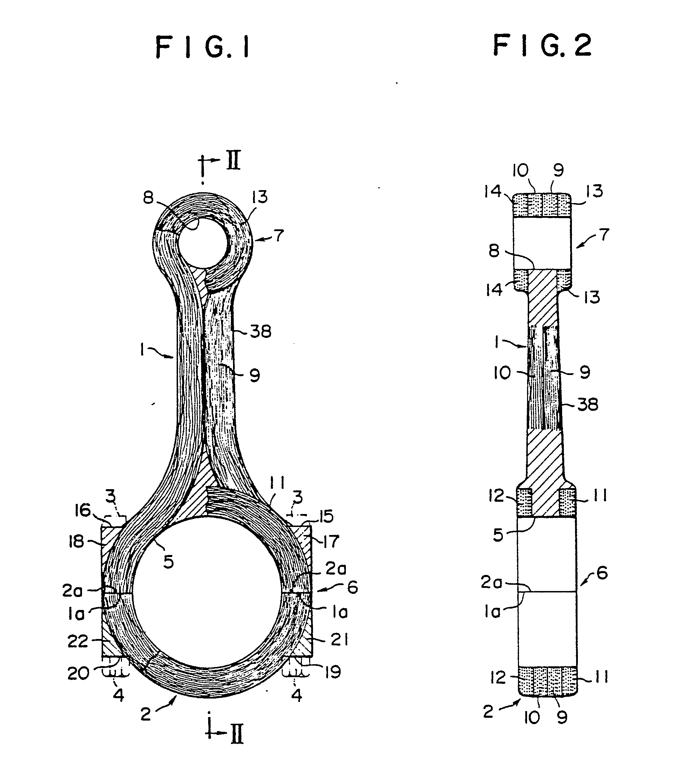

Fig. 1 shows the first preferred embodiment of the connecting rod of the present invention in schematic longitudinal cross section, and Fig. 2 shows a transverse section thereof. The connecting rod as a whole is made up out of a main body, denoted in the figure by the reference numeral 1, and a big end cap 2. The main body 1 has a shaft 38, and a semicircular big snd defining shape on the lower end in the figure of the shaft 38 terminates in two mating surfaces 1a. The big end cap 2 is formed in a corresponding semicircular shape of the same radius, and has two corresponding mating surfaces 2a which are abutted against the mating surfaces 1a. Mounting portions 17 and 18 are provided on the sides of the horns of said semicircular shape on the end of the main body 1, and are pierced with mounting holes (although these cannot be seen in the figures); and similarly mounting portions 21 and 22 are provided on the sides of the big end cap 2, and are likewise pierced with mounting holes (also not shown in the figures) corresponding to the holes in the mounting portions 17 and 18; and the big end cap 2 is tightly held in the shown position against the main body 1 when the connecting rod is assembled by means of a pair of bolts 3 which are passed through said paired mounting holes in the mounting portions 17, 18, 21, and 22 and are engaged to nuts 4. The nuts 4 are tightened up so that the heads of the bolts 3 are pressed against the ends 15, 16 of said mounting holes in the mounting portions 17, 18 respectively, while the nuts 4 are pressed against the ends 19, 20 of said mounting holes in the mounting portions 21, 22, respectively, in a per se well known way. Thereby, when the connecting rod is thus assembled, a big end 6 is defined, which has a circular big end hole 5 opening through it for seating a big end bearing for pivotally receiving a crank pin of a crankshaft, neither of which is shown in the figures. Also, at the other end of the main body 1 of the connecting rod, a small end 7 is defined, which has a circular small end hole 8 opening through it for seating a piston pin for pivotally mounting a piston, neither of these again being shown in the figures.

According to an aspect of the present invention, the conecting rod shown in Figs. 1 and 2 is made from a connecting rod preform according to the present invention in which the big end cap 2 is integral with the main body 1, by cutting off the big end cap portion 2 from the main body 1 by slicing along the plane of the mating faces 1a and 2a with a cutting tool. Now, this preform is not particularly independently shown in the figures because its configuration can easily be understood from the views of the finished connecting rod shown in Figs. 1 and 2, since it is of the same size and shape as the conjoined body composed of the main body 1 and the cap 2 in these figures; and henceforth parts of this preform corresponding to parts of the finished connecting rod assembly will be referred to by the same reference numerals. This preform is made up of aluminum alloy matrix metal of JIS standard AC7A, which is a light metal, with reinforcing fibers disposed in it as follows.

A pair of large endless loops or annuli made of multiple long fibers of reinforcing material lying together in a bundle, denoted by the reference numerals 9 and 10 in the figures, which will be called henceforward the reinforcing fiber main loops, are located lying in the preform as extending around both the transversely central portion of its big end 6 (as seen in Fig. 2), and the tranversely central portion of its small end 7 also as seen in Fig. 2), and also (pinched so as to lie together) as extending along the shaft 38 in between these, so as to form as a whole an approximately figure-8 shape, which cannot be completely seen in Fig. 1 because parts of other loops 11 and 13 are shown as lying in front of it. A pair of smaller endless loops or annuli also made of multiple long fibers of reinforcing material lying together in a bundle, denoted by the reference numerals 11 and 12 in the figures, which will be called henceforward the reinforcing fiber big end loops, are located lying exclusively in the big end portion 6 of the preform extending around its big end hole 5 generally in a cirular shape, on the outside of the portions of the main loop 9 and 10 in said big end portion 6 on either side thereof with respect to the central axis of the big end hole 5, as may be best seen in the section of Fig. 2. And a pair of still smaller endless loops or annuli also made of multiple long fibers of reinforcing material lying together in a bundle, denoted by the reference numerals 13 and 14 in the figures, which will be called henceforward the reinforcing fiber small end loops, are located lying exclusively in the small end portion 7 of the preform extending around its small end hole 8 generally in a circular shape, on the outside of the portions of the main loops 9 and 10 in said small end portion 7 on either side thereof with respect to the central axis of the small end hole 8, as may also be best seen in Fig. 2. In this first preferred embodiment, the long fiber material of which these three loops are made is alumina fiber type FP (this is a trademark), made by Dupont. And, in the shown first embodiment, the four mounting portions 17, 18, 21, and 22, on the big end portion of the preform for the bolts 3 and nuts 4 to be mounted in are themselves also composite reinforced by alumina short fiber material, which is made by chopping up alumina fiber type FP (trademark) made by Dupont into pieces about 6 mm long. The short fibers of this material are substantially randomly oriented within the mounting portions 17, 18, 21, and 22, although they cannot be particularly seen in the figures.

Manufacture of the first embodiment

This connecting rod preform was manufactured as follows, according to one aspect of the present invention.

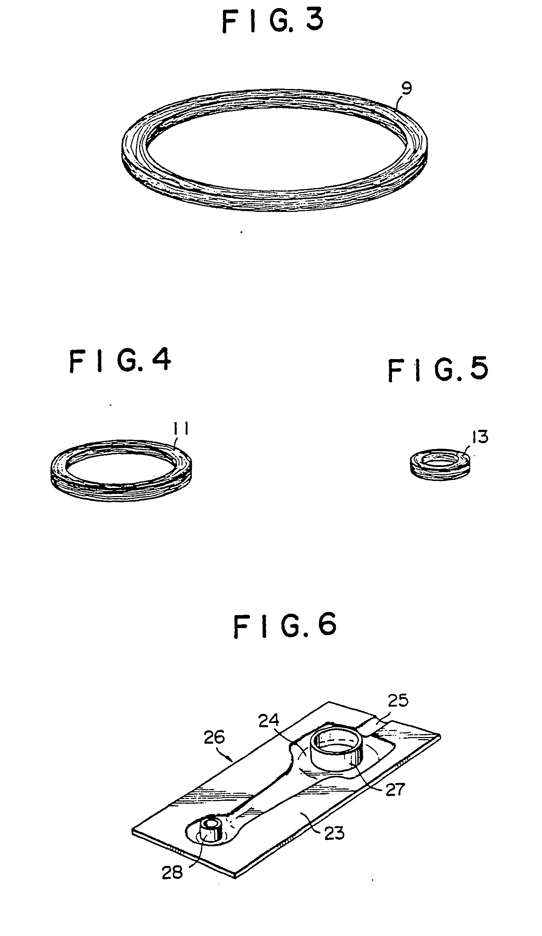

First, by winding alumina fiber yarn of type FP (trademark) made by Dupont on three formers (shaped as flanged cylindrical bodies but not shown) of diameters respectively 120 mm, 53 mm, and 18 mm, twelve examples of the reinforcing fiber main loop shown in perspective view in Fig. 3 and designated as 9 (and 10) were made, each being approximately 138 mm in external diameter, approximately 120 mm in internal diameter, approximately 8 mm in thickness, and having about 105,000 fibers in all lying side by side; twelve examples of the reinforcing fiber big end loop shown in perspective view in Fig. 4 and designated as 11 (and 12) were made, each being approximately 71 mm in external diameter, approximately 43 mm in internal diameter, approximately 5 mm in thickness, and having about 73,500 fibers in all lying side by side; and twelve examples of the reinforcing fiber small end loop shown in perspective view in Fig. 5 and designated as 13 (and 14) were made, each being approximately 34 mm in external diameter, approximately 18 mm in internal diameter, approximately 5 mm in thickness, and having about 63,000 fibers in all lying side by side.

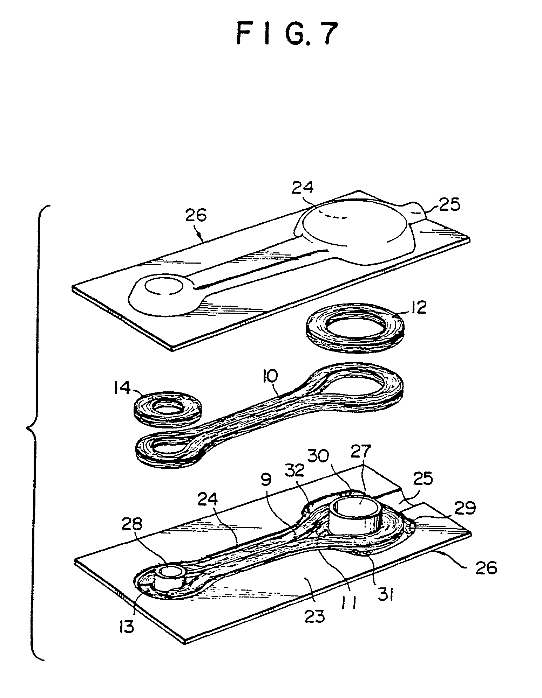

Next, by press forming from pieces of stainless steel plate (of JIS standard SUS-304) approximately 1.5 mm in thickness, six molds or containers were made, each consisting of a top half as shown in Fig. 7 and a bottom half 26 as shown in Figs. 6 and 7, each half 26 having a depression 24 which substantially defined one side of the outer surface of the connecting rod preform substantially as described earlier which was to be made and a shallow trench 25 defining a passage for communicating this depression 24 to the outside of the plate. To each of the bottom halves 26 of the containers there were welded two tubes made of stainless steel (of JIS standard SUS-304) of wall thickness approximately 1 mm: a big end defining tube 27 of approximate external diameter 43 mm and approximate length 26 mm in the center of the part of the depression 24 corresponding to the big end of the connecting rod preform, and a small end defining tube 28 of approximate external diameter 18 mm and approximate length 26 mm in the center of the part of the depression 24 corresponding to the small end of the connecting rod preform.

Next, as particularly shown in the exploded view of Fig. 7, each of the molds or containers was assembled from its lower and upper halves 26, with two of each of the three types of reinforcing fiber loops described above assembled thereinto, as follows. First, one of the reinforcing fiber big end loops shown in Fig. 4, designated as 11, was placed into the lower half 26 of the mold, snugly fitted round the big end hole defining tube 27 and lying in the part of the depression 24 corresponding to the big end of the connecting rod preform, and similarly one of the reinforcing fiber small end loops shown in Fig. 5, designated as 13, was placed into the lower half 26 of the mold, snugly fitted round the small end hole defining tube 28 and lying in the part of the depression 24 corresponding to the small end of the connecting rod preform. Next, one of the reinforcing fiber main loops shown in Fig. 3, designated as 9, was placed into the lower half 26 of the mold, wound into a generally figure-8 shape, going around the big end hole defining tube 27 on top of the reinforcing fiber big end loop 11 resting therein, along the main straight portion of the depression 24 of the lower half 26 of the mold corresponding to the arm portion of the connecting rod preform, around the small end hole defining tube 28 on top of the reinforcing fiber small end loop 13 resting therein, and back again along the main straight portion of the depression 24 so as to lie alongside itself in this portion of the mold. Next, another of the reinforcing fiber main loops shown in Fig. 3, this one designated as 10, was placed in the same layout as he main loop 9 on top of it (as shown in exploded view in Fig. 7). Next, another of the reinforcing fiber big end loops shown in Fig. 4, this one designated as 12, was placed on top of said reinforcing fiber main loop 10, again snugly fitted round the big end hole defining tube 27 at the end of the depression 24 corresponding to the big end of the connecting rod preform. And finally, another of the reinforcing fiber small end loops shown in Fig. 5, this one designated as 14, was placed on top of said reinforcing fiber main loop 10, again snugly fitted round the small end hole defining tube 28 at the end of the depression 24 corresponding to the small end of the connecting rod preform. Then, in conclusion, for assemblies 20, 30, 31, and 32, composed of short cut alumina fiber in substantially random orientations made by chopping up alumina fiber type FP (trademark) made by Dupont into pieces about 6 mm long, were placed into and extending up from the part of the depression 24 corresponding to the big end of the connecting rod preform, at four places around the reinforcing fiber big end loops 11 and 12 and the parts of the main loops 9 and 10 arranged thereagainst, in appropriate positions to reinforce the particular parts designated as 17, 18, 21, and 22 of the finished connecting rod preform as illustrated in Fig. 1.

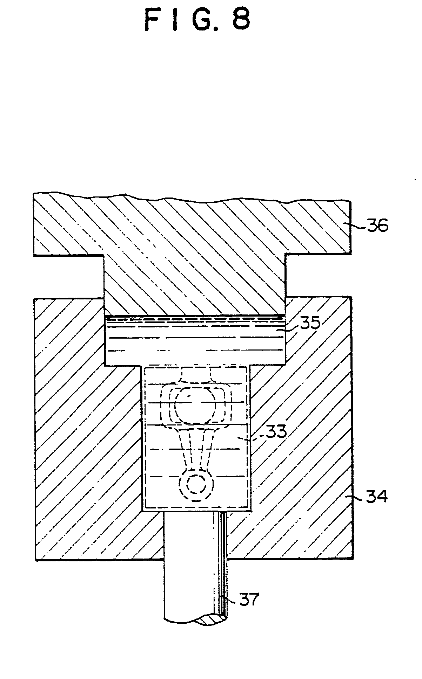

Next, the upper half 26 of the mold was approached downwards against this assembly, and the faces 23 of the lower and upper halves 26 were intimately contacted together, with the upper reinforcing fiber main loop 10 and big end loop 12 and small end loop 14 being received in the depression 24 of said upper mold half 26; and then the outer peripheries of the upper and lower mold halves 26 were welded together, thus defining a connecting rod preform shaped cavity between them with two of each of the main loop, the big end loop and the small end loop received therein, and with a narrow passage opening to the outside being defined by grooves or trenches 25 on the mold halves 26, which opposed one another. Each of the six molds thus formed and charged with the reinforcing fiber loops 9, 10, 11, 12, 13, and 14 in appropriate positions (designated by the reference numeral 33) was then preheated to a temperature of approximately 800°C in a furnace; and then it was introduced into the cavity of a casting mold 34 for high pressure casting, as shown in schematic section in Fig. 8. Then a quantity 35 of molten aluminum alloy of JIS standard AC7A at about 750°C was briskly poured into the mold cavity, and by inserting a plunger 36 into the top of the mold 34 with which said plunger 36 closely cooperated, the molten aluminum alloy mass 35 was pressurized to approximately 1500 kg/cm², and was infiltrated into the inside of the charged mold 33 through the passage defined by the grooves 25, so as to penetrate between the reinforcing fibers of the loops 9, 10, etc. This pressurized state was maintained until the aluminum alloy mass 35 had completely solidified. Then the solidified body was removed from the casting mold 34 by the use of a knock pin 37, and the mold 33 and the connecting rod preform now formed therein were cut out therefrom. The halves 26 of the stainless steel mold were then removed by being cut around their welded peripheries and pulled apart, and the rough connecting rod preform was taken out. Finally, each of these six rough connecting rod preforms was machined, as for example by grinding, to form a finished preform; and then each of these was made into a finished connecting rod (intended for application to a 2000 cc gasoline engine) by first boring the holes through the portions 15, 16, 21, and 22 of the big end portion 6 thereof for accommodating the bolts 3 and then cutting across said big end portion 6 in a plane including the central axis of the big end hole 5 and perpendicular to the central axis of the preform, as shown in Fig. 1.

Testing of the first embodiment

For each of these connecting rods formed according to the first preferred embodiment of the present invention: its length was about 175 mm, the diameter of its big end hole 5 was about 45 mm, the diameter of its small end hole 8 was about 18 mm, the distance between the central axes of its big end hole and its small end hole was about 120 mm, the average thickness in the direction of the axes of its big and small end hole of the big and small end portions was both about 25 mm, and the average thickness in the same direction of its arm portion was about 12 mm. The weight of each of these six connecting rods was about 350 gm, which is about 35% less than the weight of a comparable connecting rod for a six cylinder 2000 cc gasoline internal combustion engine made by forging steel. Also, the weight balance of the small end portion against the big end portion, in this first preferred embodiment, was found to be about 100 gm to 250 gm.

These six connecting rods were assembled into a six cylinder 2000 cc gasoline internal combustion engine, which was then operated for 200 hours at full load at about 5800 rpm, to perform a continuous durability test. At the end of this test, when the engine was disassembled, the connecting rods were confirmed not to have substantially deteriorated or to have cracked, and thus it was verified that their durability was good.

Comparison example

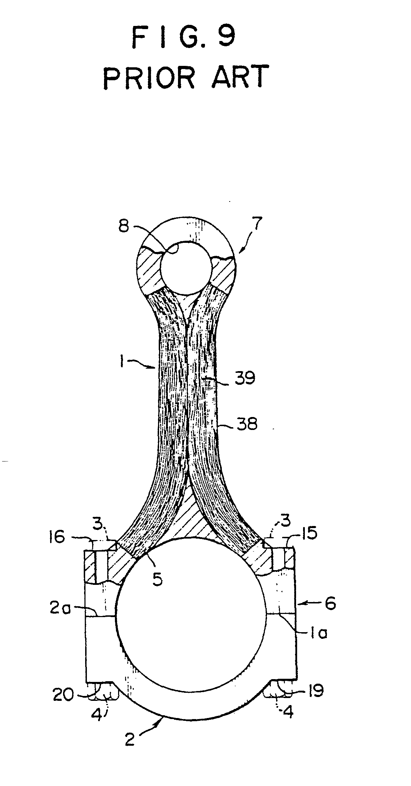

For purposes of comparison, six connecting rods of a conventional type, as shown in schematic form in Fig. 9 in which like reference symbols refer to like parts as in the first embodiment, were made. These rods were of substantially the same external dimensions as the ones according to the first embodiment described above, but were only composite reinforced in their arm portions and in the proximate portions of the big and small ends, as shown in the figure and as described in the introductory portion of this specification with respect to the prior art. The bundles 39 of alumina fiber used for this reinforcement were again alumina fiber type FP (trademark) made by Dupont, and in all about 480,000 fibers lay sde by side in them, as viewed in perpendicular cross section.

Then these six comparison connecting rods were fitted, as in the csae of the first embodiment, to a test gasoline engine of 2000 cc capacity, and a continuous durability test under the same conditions as before was initiated. However, after the passage of five hours from the start of this test, some reduction in engine power output became apparent, and this was due to some deformation having occurred in the big ends and the small ends of the connecting rods. Further, after ten hours in all from the beginning of the test, the engine had to be stopped, due to the catastrophic disintegration of one of the small ends (that of the connecting rod fitted to the number four cylinder). When the engine was subsequently disassembled, and the connecting rods were examined, it was found that some deformation had occurred in the big ends and the small ends of all of the connecting rods remaining intact, and further that fine cracking was evident in them all, both in their small ends and extending from the big ends to the arm portions of the rods.

When the variations of the fatigue strength (i.e. the variations of the $10^7$ durability strength) were measured, they were found to be plus or minus 10%, for the connecting rods according to the first preferred embodiment, but to be plus or minus 20% for the comparison connecting rods. This shows that the connecting rods accordig to the present invention not only were superior in durability, but varied relatively little in quality.

Second embodiment

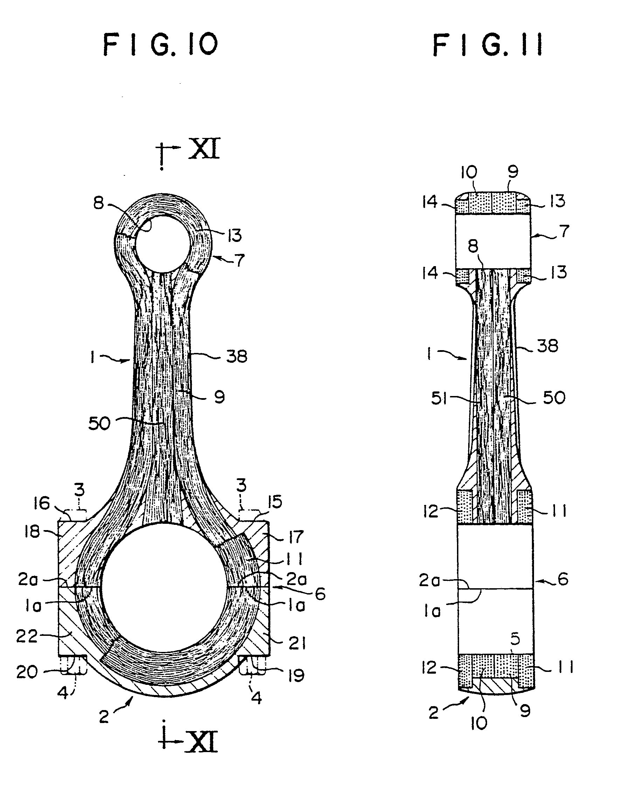

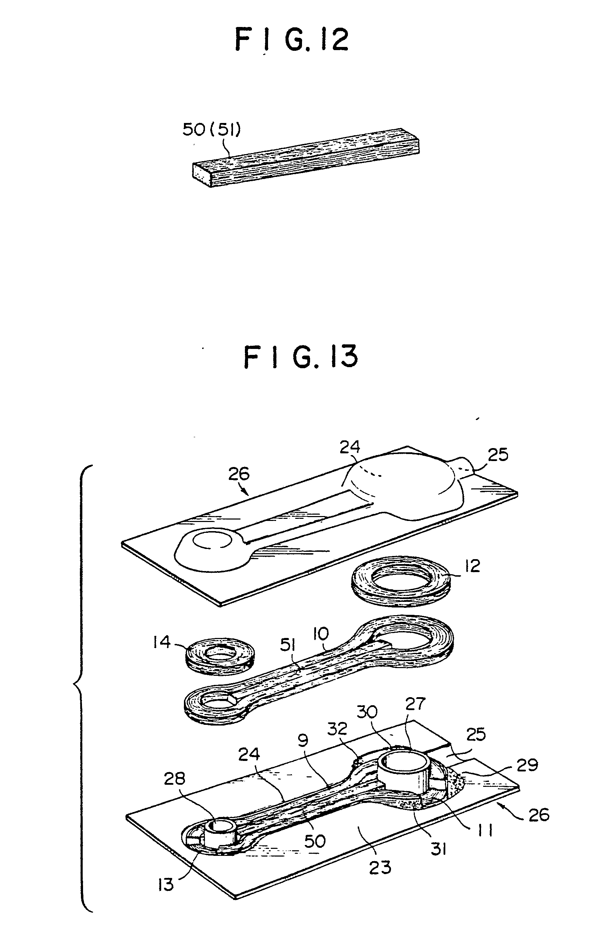

In Fig. 10, a second preferred embodiment of the connecting rod according to the present invention is shown, in a manner similar to Fig. 1 for the first embodiment; and Fig. 11 is a similar section of this second embodiment to the section of the first embodiment shown in Fig. 2. Parts of the second preferred embodiment shown which correspond to parts of the first preferred embodiment are denoted in these figures by like reference symbols. Also, as in the case of the first embodiment, the shape and construction of a second embodiment of the connecting rod preform according to the present invention can be easily inferred from these figures.

As in the case of the first embodiment, in this second embodiment the material of which the main body 1 and the big end cap 2 of the connecting rod are made is aluminum alloy of JIS standard AC7A, which is a light metal, with reinforcing fibers made of alumina fiber type FP (trademark) made by Dupont disposed therein. In this second preferred embodiment of the piston and the preform, there is utilized a similar arrangement as in the first embodiment for the reinforcing fibers included in the reinforcing fiber main loops 9 and 10, which again are located lying in the preform as extending both around the transversely central portion of its big end 6 and around the transversely central portion of its small end 7 and also as extending along the shaft 38 in between these (not however in the case of this second embodiment pinched so as to lie together), so as to form as a whole an approximately figure-8 shape, (which again cannot be completely seen in Fig. 10 because parts of the other loops 11 and 13 are shown as lying in front of it), for the reinforcing fibers included in the reinforcing fiber big end loops 11 and 12, which again are located lying exclusively in the big end portion 6 of the preform extending around its big end hole 5 generally in a circular shape, on the outside of the portions of the main loops 9 and 10 in said big end portion 6 on either side thereof with respect to the central axis of the big end hole 5, and for the reinforcing fibers included in the reinforcing fiber small end loops 13 and 14, which again are located lying exclusively in the small end portion 7 of the preform extending around its small end hole 8 generally in a circular shape, on the outside of the portions of the main loops 9 and 10 in said small end portion 7 on either side thersof with respect to the central axis of the small end hole 8. Also, in this second embodiment, there is utilized a similar arrangement as in the first embodiment for the reinforcing fibers included in the four mounting portions 17, 18, 21, and 22 on the big end portion of the connecting rod preform for the bolts 3 and nuts 4 to be mounted in: said reinforcing fibers are again orientated in substantially random orientations within the mounting portions 17, 18, 21, and 22, although this cannot be particularly seen in the figures, and they again are made by chopping up alumina fiber type FP (trademark) made by Dupont into pieces about 6 mm long. In this second preferred embodiment, however, there are additionally incorporated two substantially linear bundles 50 and 51 of long fiber, which again is alumina fiber type FP (trademark), made by Dupont. And these two linear bundles 50 and 51, as may be seen in Figs. 10 and 11, are provided in between the linear portions of the reinforcing fiber main loops 9 and 10 extending along the arm portion of the connecting rod preform, and extend substantially between the big end hole 5 and the small end hole 8 along the length of the arm portion of the preform, terminating at said big and small end holes. These two bundles 50 and 51 are superposed from the point of view of Fig. 10, i.e. lie together forming two layers as seen along the axial direction of the big and small end holes, said two layers being interposed between the linear portions of the reinforcing fiber main loops 9 and 10 extending along the arm portion of the preform with respect to a plane perpendicular to said axes of said big and small end holes.

Manufacture of the second embodiment

This connecting rod preform second embodiment was manufactured as follows, according to one aspect of the present invention.

First, similarly to the first embodiment, by winding alumina fiber yarn of type FP (trademark) made by Dupont on three formers (shaped as flanged cylindrical bodies but not shown) of diameters respectively 128 mm, 53 mm, and 18 mm, twelve examples of the reinforcing fiber main loops 9 and 10, twelve examples of the big end loops 11 and 12, and twelve examples of the small end loops 13 and 14, all like those for the first embodiment shown in Fig. 3, were made: the main loops 9 and 10 were approximately 138 mm in external diameter, approximately 128 mm in internal diameter, approximately 8 mm in thickness, and had about 60,000 fibers in all lying side by side; the big end loops 11 and 12 were approximately 71 mm in external diameter, approximately 53 mm in internal diameter, approximately 5 mm in thickness, and had about 73,500 fibers in all lying side by side; and the small end loops 13 and 14 were approximately 25 mm in external diameter, approximately 18 mm in internal diameter, approximately 8 mm in thickness, and had about 45,000 fibers in all lying side by side. Further, in addition to these, by cutting alumina fiber yarn (again of type FP, trademark, made by Dupont) into 95 mm lengths and bundling it together, twelve examples of the reinforcing fiber linear bundles shown in perspective view in Fig. 12 and designated as 50 (and 51) were made, each being approximately 95 mm in length, approximately 8 mm in width, and approximately 6 mm in height, and having about 90,000 fibers in all lying side by side.

Next, as in the first embodiment, by press forming from pieces of stainless steel plate (of JIS standard SUS-304) approximately 1.5 mm in thickness, six molds or containers were made, each consisting of top and a bottom half 26 as shown in Fig. 13 which were formed as in the first embodiment with depressions 24; and as before to each of the bottom halves 26 of the containers there were welded two tubes made of stainless steel (of JIS standard SUS-304) of wall thickness approximately 1 mm: a big end defining tube 27 this time of approximate external diameter 53 mm and approximate length 26 mm in the center of the part of the depression 24 corresponding to the big end of the connecting rod preform, and a small end defining tube 28 of approximate external diameter 18 mm and approximate length 26 mm in the center of the part of the depression 24 corresponding to the small end of the connecting rod preform.

Next, as particularly shown in the exploded view of Fig. 13, each of the molds or containers was assembled from its lower and upper halves 26, with two of each of the four types of reinforcing fiber loops described above assembled thereinto, as follows. First, as in the first embodiment, one of the reinforcing fiber big end loops 11 was placed into the lower half 26 of the mold, snugly fitted round the big end hole defining tube 27 and lying in the part of the depression 24 corresponding to the big end of the connecting rod preform, and similarly one of the reinforcing fiber small end loops 13 was placed into the lower half 26 of the mold, snugly fitted round the small end hole defining tube 28 and lying in the part of the depression 24 corresponding to the small end of the connecting rod preform. Next, one of the reinforcing fiber main loops 9 was placed into the lower half 26 of the mold, wound into a generally figure-8 shape, going around the big end hole defining tube 27 on top of the reinforcing fiber big end loop 11 resting therein, along the main straight portion of the depression 24 of the mold corresponding to the arm portion of the connecting rod preform and pressed against one side of said main straight portion, around the small end hole defining tube 28 on top of the reinforcing fiber small end loop 13 resting therein, and back again along the main straight portion of the depression 24 and pressed against the other side of said main straight portion so as to lie alongside itself in this portion of the mold with a certain gap between its two runs. Next, one of the reinforcing fiber linear bundles shown in Fig. 12, designated as 50 was placed into the lower half 26 of the mold, lying generally straight along said main straight portion of the depression 24 of the lower half 26 of the mold corresponding to the arm portion of the connecting rod preform, between said two runs of the reinforcing fiber main loop 9 lying therein and in contact with both of them. Next, another of the reinforcing fiber main loops 10 was placed in the same layout as the loop 9 on top of it, as shown in exploded view in Fig. 13. Then, another of the reinforcing fiber linear bundles shown in Fig. 12, this one designated as 51, was placed in the same layout as the linear bundle 50 on top of it, lying generally straight along and above the main straight portion of the depression 24 of the lower half 26 of the mold corresponding to the arm portion of the connecting rod preform, and between the two straight runs of the reinforcing fiber main loop 10 and in contact with both of them. Next, another of the reinforcing fiber big end loops 12 was placed on top of said reinforcing fiber main loop 10, again snugly fitted round the big end hole defining tube 27 at the end of the depression 24 corresponding to the big end of the connecting rod preform. And finally another of the reinforcing fiber small end loops 14 was placed on top of said reinforcing fiber main loop 10, again snugly fitted round the small end hole defining tube 28 at the end of the depression 24 corresponding to the small end of the connecting rod preform. Then, in conclusion, as in the first preferred embodiment, four assemblies 29, 30, 31, and 32, composed of short cut alumina fiber in substantially random orientations made by chopping up alumina fiber type FP (trademark) made by Dupont into pieces about 6 mm long, were placed into and extending up from the part of the depression 24 corresponding to the big end of the connecting rod preform, at four places around the reinforcing fiber big end loops 11 and 12 and the parts of the main loops 9 and 10 arranged thereagainst, in appropriate positions to reinforce the particular parts designated as 17, 18, 21, and 22 of the finished connecting rod preform as illustrated in Fig. 10.

Next, as in the first embodiment, the upper half 26 of the mold was approached to and was welded to this lower half, with the upper reinforcing fiber main loop 10 and linear bundle 51 and big end loop 12 and small end loop 14 being received in the depression 24 of said upper mold half 26, thus defining a connecting rod preform shaped cavity between them with two of each of the main loop, the linear bundles, the big end loop, and the small end loop received therein, and with a narrow passage opening to the outside being defined. Each of the six molds thus formed and charged with the reinforcing fiber loops 9, 10, 11, 12, 13, 14, 50, and 51 in appropriate positions therein was, as in the first embodiment, then preheated to a temperature of approximately 800°C in a furnace; and then it was introduced into the cavity of a casting mold for high pressure casting, and a quantity of molten aluminum alloy of JIS standard AC7A at about 750°C was briskly poured into the mold cavity, and by inserting a plunger into the top of the mold the molten aluminum alloy mass was pressurized to approximately 1500 kg/cm², and was infiltrated into the inside of the charged mold so as to penetrate between the reinforcing fibers of the loops 9, 10, etc. This pressurized state was maintained until the aluminum alloy mass had completedly solidified, and then the solidified body was removed from the casting mold and the mold and the connecting rod preform now formed therein were cut out therefrom. The halves 26 of the stainless steel mold were then removed, and the rough connecting rod preform was taken out. Finally, each of these six rough connecting rod preforms was as before machined, as for example by grinding, to form a finished preform; and then each of these was made into a finished connecting rod (again intended for application to a 2000 cc gasoline engine) by cutting across its big end portion 6 in a plane including the central axis of the big end hole 5 and perpendicular to the central axis of the preform, as shown in Fig. 10.

Testing of the second embodiment

For each of these connecting rods formed according to the second preferred embodiment of the present invention: its length was about 175 mm, the diameter of its big end hole 5 was about 53 mm, the diameter of its small end hole 8 was about 18 mm, the distance between the central axes of its big end hole and its small end hole was about 120 mm, the average thickness in the direction of the axes of its big and small end hole of the big and small end portions was both about 25 mm, and the average thickness in the same direction of its arm portion was about 15 mm. The weight of each of these six connecting rods was about 320 gm, which is about 36% less than the weight of a comparable connecting rod for a six cylinder 2000 cc gasoline internal combustion engine made by forging steel, and is better even than the weight of the connecting rods according to the first preferred embodiment. Also, the weight balance of the small end portion against the big end portion, in this first preferred embodiment, was found to be about 70 gm to 250 gm, which is comparatively much better than the 100 gm to 250 gm of the first preferred embodiment.

When these six connecting rods were assembled into a six cylinder 2000 cc gasoline internal combustion engine, which was then operated for 200 hours at full load at about 5800 rpm, to perform a continuous durability test, it was found that at the end of this test, when the engine was disassembled, the connecting rods were confirmed not to have substantially deteriorated or to have cracked, and thus it was verified that their durability was good.

Third embodiment

The third preferred embodiment of the connecting rod according to the present invention is not particularly shown in any figures, because it was constructionally the same as the second preferred embodiment described above and shown in Figs. 10 through 13, except for using different materials. The process of manufacture of this third preferred embodiment was also analogous to the process of manufacture of the second embodiment, and it will not be particularly explained herein, in the interests of brevity of description; and the dimensions of the parts were approximately the same.

Contrary to the case of the first and second embodiments, in this third embodiment the matrix metal material of which the main body 1 and the big end cap 2 of the connecting rod are made was aluminum alloy of JIS standard AC4C, which is again a light metal, with reinforcing fibers made of carbon fiber and of boron fiber disposed therein. In detail, the material of the reinforcing fiber main loops 9 and 10 was carbon fiber of type Toreka M40 (trademark, made by Tore K.K.) and the number of fibers lying side by side in them was approximately 393,000; the material of the reinforcing fiber linear bundles 50 and 51 was boron fiber of approximate fiber diameter 140 microns made by AVCO K.K., and the number of fibers lying side by side in them was approximately 1700; the material of the reinforcing fiber big end loops 11 and 12 was again carbon fiber of type Toreka M40 (trademark, made by Tore K.K.), and the number of fibers lying side by side in them was approximately 63,000; and the material of the reinforcing fiber small end loops 13 and 14 was again carbon fiber of type Toreka M40 (trademark, made by Tore K.K.), and the number of fibers lying side by side in them was approximately 73,500.

For each of these connecting rods formed according to this third preferred embodiment of the present invention, its weight was about 255 gm, i.e. even 65 gm better than the weight of the connecting rods according to the second preferred embodiment. Also, the weight balance of the small end portion against the big end portion, in this first preferred embodiment, was found to be about 55 gm to 200 gm, which is comparatively much better than the 100 gm to 250 gm of the first preferred embodiment. And when these six connecting rods were assembled into a six cylinder 2000 cc gasoline internal combustion engine, and were tested as before, at the end of the test the connecting rods were confirmed not to have substantially deteriorated or to have cracked, and thus it was again verified that their durability was good.

Although the present invention has been shown and described with reference to the preferred embodiments thereof, and in terms of the illustrative drawings, it should not be considered as limited thereby. Various possible modifications, omissions, and alternations could be conceived of by one skilled in the art to the form and the content of any particular embodiment, without departing from the scope of the present invention. For example, although the matrix metal used in all the three preferred embodiments described was aluminum alloy of various sorts, in fact other light metals might also be used. Also, the reinforcing fibers used for the various reinforcing fiber bundles and loops may be alumina fibers, carbon fibers, silicon carbide fibers, boron fibers, or other types of fiber material which are suitable for combination with the light weight metal used as the matrix metal and which are good in their strength increasing effect, although particularly it is considered that alumina fibers, silicon carbide fibers, or carbon fibers are suitable as material for making up the reinforcing fiber main loops, big end loops, and small end loops, while alumina fibers, silicon carbide fibers, or boron fibers are suitable as material for making up the reinforcing fiber linear bundles. Therefore it is desired that the scope of the present invention, and of the protection sought to be granted by Letters Patent, should be defined not by any of the perhaps purely fortuitous details of the shown preferred embodiments, or of the drawings, but solely by the scope of the appended claims, which follow.

## Claims

1. a connecting rod assembly for an internal combustion engine, comprising: a generally annular big end portion (6) formed with a big end hole (5) for rotatably receiving a crank shaft, a generally annular small end portion (7) formed with a small end hole (8) for rotatably receiving a piston pin, and an arm portion (38) extending between said big end portion and said small end portion; said big end portion (5) comprising a first half portion integral with said arm portion (38) and a second half portion (2) separable from said first half portion along a plane of separation (1a, 2a) which divides said big end hole (5) into two substantially equal parts; said connecting rod assembly having a cross sectional structure of light metal alloy matrix being reinforced with bundles of fibers cast therein, characterized in that said bundles of fibers include a main bundle (9, 10) of fibers of a generally figure-8 configuration including a big end curved portion adapted to pass within said big end portion (6) around said big end hole (5) of said connecting rod assembly, a small end curved portion adapted to pass within said small end portion (7) around said small end hole (8) of said connecting rod assembly and straight portions adapted to pass within said arm portion (38) of said connecting rod assembly in two runs therealong, said main bundle (9, 10) of fibers being smoothly continuous in said generally figure-8 configuration in the region of the plane of separation (1a, 2a), each fiber of said main bundle (9, 10) of fibers being cut to produce two ends abutting the separation plane (1a, 2a) from respective sides.

2. A connecting rod assembly according to claim 1, wherein said bundle of fibers comprises a big end bundle (11, 12) of fibers adapted to pass in a circular configuration substantially only within said big end portion (6) around said big end hole (5) of said connecting rod assembly as substantially superposed over said big end curved portion of said main bundle (9, 10) of fibers, said big end bundle (11, 12) of fibers being smoothly continuous in generally circular configuration thereof at a portion thereof where said figure-8 configuration of said big end bundle of fibers traverses said separation plane (1a, 2a), each fiber of said big end bundle (11, 12) of fibers being cut to produce two ends abutting the separation plane from respective sides.

3. A connecting rod assembly according to claim 1 or 2, wherein said bundles of fiber further comprising a small end bundle (13, 14) of fibers adapted to pass in a circular configuration substantially only within said small end portion (7) around said small end hole (8) of said connecting rod assembly as substantially superposed over said small end curved portion of said main bundle (9, 10) of fibers.

4. A connecting rod assembly according to any one of claims 1 to 3, wherein said main bundle (9, 10) of fibers is provided as a pair of bundles (9, 10) of fibers of substantially same figure-8 configuration and separation configuration of the fibers superposed one over the other.

5. A connecting rod assembly according to any one of claims 2 to 4, wherein said big end bundle (11, 12) of fibers is provided as a pair of bundles (11, 12) of fibers of substantially same circular configuration and separation configuration superposed on opposite sides of said main bundle (9, 10) of fibers.

6. A connecting rod assembly according to any one of claims 3 to 5, wherein said small end bundle (13, 14) of fibers is provided as a pair of bundles (13, 14) of fibers of substantially same circular configuration superposed on opposite sides of said main bundle (9, 10) fibers.

7. A connecting rod assembly according to any one of claims 1 to 6, wherein said bundle of fibers further comprises a linear bundle (50, 51) of fibers adapted to pass in a straight configuration substantially only within said arm portion (38) of said connecting rod assembly as sandwiched between said two turns of said main bundle (9, 10) of fibers.

8. A connecting rod assembly according to claim 7, wherein said linear bundle of fibers (50, 51) is provided as a pair of bundles (50, 51) of fibers superposed one over the other.

9. A method of manufacturing the connecting rod assembly according to any one of claims 1 to 8, comprising the steps of preparing said bundle (9—14, 50, 51) of fibers, and molding a mass of a matrix metal around said bundle of fibers with said bundle of fibers being embedded therein so as to form a preform of said connecting rod assembly, characterized in that said second half portion (2) of said big end portion (5) is cut from said first half portion of said big end portion (5) integral with said arm portion (38) along said plane of separations (1a, 2a) after said preform has been molded.

10. A method according to claim 9, wherein said bundle of fibers is provisionally mounted in a case (26) which defines a molding cavity (24) having a configuration corresponding to the configuration of said preform around said bundle of fibers prior to the molding of said preform.

## Patentansprüche

1. Pleuelstangenaufbau für eine Brennkraftmaschine, mit:
einem im wesentlichen ringförmigen, großen Endabschnitt (6), der mit einem großen Endloch (5) zur drehbaren Aufnahme einer Kurbelwelle ausgebildet ist, einem im wesentlichen ringförmigen, kleinen Endabschnitt (7), der mit einem kleinen Endloch (8) zur drehbaren Aufnahme eines Kolbenbolzens ausgebildet ist, und einem Armabschnitt (38), der sich zwischen dem großen Endabschnitt und dem kleinen Endabschnitt erstreckt, wobei der große Endabschnitt (5) einen mit dem Armabschnitt (38) einstückigen ersten Halbabschnitt und einen zweiten Halbabschnitt (2) aufweist, der vom ersten Halbabschnitt entlang einer Trennungsebene (1a, 2a) trennbar ist,
die das große Endloch (5) in zwei im wesentlichen gleiche Teile teilt, wobei der Pleuelstangenaufbau eine Querschnittsstruktur aus einer Leichtmetall-Legierungsmatrix aufweist, die mit eingebundenen Faserbündeln verstärkt ist, dadurch gekennzeichnet, daß die Faserbündel ein Hauptfaserbündel (9, 10) von im wesentlichen 8-förmiger Konfiguration umfassen, das einen großendigen gekrümmten Abschnitt, der innerhalb des großen Endabschnitts (6) um das große Endloch (5) des Pleuelstangenaufbaus herum verläuft, einen kleinendigen gekrümmten Abschnitt, der innerhalb des kleinen Endabschnitts (7) um das kleine Endloch (8) des Pleuelstangenaufbaus herum verläuft, und gerade Abschnitte aufweist, die innerhalb des Armabschnitts (38) des Pleuelstangenaufbaus in zwei Bahnen verlaufen, wobei das Hauptfaserbündel (9, 10) im Bereich der Trennungsebene (1a, 2a) kontinuierlich glatt in der im wesentlichen 8-förmigen Konfiguration verläuft und wobei jede Faser des Hauptfaserbündels (9, 10) zur Bildung zweier Enden, die von entsprechenden Seiten an der Trennungsebene (1a, 2a) anliegen, durchgeschnitten ist.

2. Pleuelstangenaufbau nach Anspruch 1, dadurch gekennzeichnet, daß das Faserbündel ein großendiges Faserbündel (11, 12) aufweist, das in einer kreisförmigen Konfiguration im wesentlichen nur innerhalb des großen Endabschnitts (6) um das große Endloch (5) des Pleuelstangenaufbaus herum verläuft und im wesentlichen dem großendigen gekrümmten Abschnitt des Hauptfaserbündels (9, 10) überlagert ist, wobei das großendige Faserbündel (11, 12) in einem Bereich, in dem die 8-förmige Konfiguration des großendigen Faserbündels die Trennungsebene (1a, 2a) durchläuft, kontinuierlich glatt in im wesentlichen kreisförmiger Konfiguration verläuft, wobei jede Faser des großendigen Faserbündels (11, 12) zur Bildung zweier Enden, die von entsprechenden Seiten an der Trennungsebene anliegen, durchgeschnitten ist.

3. Pleuelstangenaufbau nach Anspruch 1 oder 2, dadurch gekennzeichnet, daß die Faserbündel des weiteren ein kleinendiges Faserbündel (13, 14) aufweisen, das in einer kreisförmigen Konfiguration im wesentlichen nur innerhalb des kleinen Endabschnitts (7) um das kleine Endloch (8) des Pleuelstangenaufbaus herum verläuft und im wesentlichen dem kleinendigen gekrümmten Abschnitt des Hauptfaserbündels (9, 10) überlagert ist.

4. Pleuelstangenaufbau nach einem der Ansprüche 1 bis 3, dadurch gekennzeichnet, daß das Hauptfaserbündel (9, 10) als ein Paar von Faserbündeln mit im wesentlichen der gleichen 8-förmigen Konfiguration und Trennungskonfiguration der übereinander angeordneten Fasern ausgebildet ist.

5. Pleuelstangenaufbau nach einem der Ansprüche 2 bis 4, dadurch gekennzeichnet, daß das großendige Faserbündel (11, 12) als ein Paar von Faserbündeln (11, 12) ausgebildet ist, die auf entgegengesetzten Seiten des Hauptfaserbündels (9, 10) mit im wesentlichen der gleichen kreisförmigen Konfiguration und Trennungskonfiguration angeordnet sind.

6. Pleuelstangenaufbau nach einem der Ansprüche 3 bis 5, dadurch gekennzeichnet, daß das kleinendige Faserbündel (13, 14) als ein Paar von Faserbündeln (13, 14) auf entgegengesetzten Seiten des Hauptfaserbündels (9, 10) angeordnet und mit im wesentlichen der gleichen kreisförmigen Konfiguration ausgebildet ist.

7. Pleuelstangenaufbau nach einem der Ansprüche 1 bis 6, dadurch gekennzeichnet, daß das Faserbündel des weiterin ein geradliniges Faserbündel (50, 51) aufweist, das in geradliniger Konfiguration im wesentlichen nur innerhalb des Armabschnitts (38) des Pleuelstangenaufbaus verläuft und zwischen zwei Lagen des Hauptfaserbündels (9, 10) angeordnet ist.

8. Pleuelstangenaufbau nach Anspruch 7, dadurch gekennzeichnet, daß das geradlinige Faserbündel (50, 51) als ein Paar von übereinander angeordneten Faserbündeln (50, 51) ausgebildet ist.

9. Verfahren zur Herstellung des Pleuelstangenaufbaus gemäß einem der Ansprüche 1 bis 8, mit den Schritten des Vorbereitens des Faserbündels (9—14, 50, 51) und des Gießens einer Masse eines Matrixmetalls um das Faserbündel, wobei das Faserbündel derart in dieser eingebettet wird, daß eine Vorform des Pleuelstangenaufbaus erzielt ist, dadurch gekennzeichnet, daß der zweite Halbabschnitt (2) des großen Endabschnitts (5) von dem ersten Halbabschnitt des großen Endabschnitts (5), der einstückig mit dem Armabschnitt (39) ausgebildet ist, entlang der Trennungsebene (1a, 2a) abgeschnitten wird, nach dem die Vorform gegossen ist.

10. Verfahren nach Anspruch 9, dadurch gekennzeichnet, daß das Faserbündel provisorisch in einem Gehäuse (26) angeordnet wird, das einen Gießhohlraum (24) mit einer Konfiguration bildet, die der Konfiguration der Vorform um das Faserbündel vor dem Gießen der Vorform entspricht.

**Revendications**

1. Un montage de tige de bielle pour un moteur à combustion interne, comprenant: une partie (6) de grande extrémité généralement annulaire comportant un trou (5) de grande extrémité pour recevoir en rotation un vilebrequin, une partie (7) de petite extrémité généralement annulaire comportant un trou (8) de petite extrémité pour recevoir en rotation un axe de piston, et une partie de bras (38) s'étendant entre ladite partie de grande extrémité et ladite partie de petite extrémité; ladite partie (5) de grande extrémité comprenant une première demi-partie d'un seul tenant avec ladite partie de bras (38) et une seconde demi-partie (2), séparable de ladite première demi-partie, le long d'un plan de séparation (1a, 2a) qui divise ledit trou (5) de grande extrémité en deux parties sensiblement égales; ledit montage de tige présentant une structure en section transversale de matrice d'alliage léger qui est renforcée par des faisceaux de fibres qui y sont coulés, caractérisé en ce que lesdits faisceaux de fibres comprennent un faisceau principal (9, 10) de fibres, dont la configuration est généralement en forme de 8 comprenant une partie courbée de grande extrémité, adaptée à passer à travers ladite partie (6) de grande extrémité autour dudit trou (5) de grande extrémité dudit montage de tige de bielle, une partie courbée de petite extrémité adaptée à passer à l'intérieur de ladite partie (17) de petite extrémité autour dudit trou (8) de petite extrémité dudit montage de tige de bielle et des parties droites adaptées à passer à l'intérieur de ladite partie (38) de bras dudit montage de tige de bielle en deux passages le long de celui-ci, ledit faisceau principal (9, 10) de fibres étant uniformément continu dans ladite configuration généralement en forme de 8 dans la région du plan de séparation (1a, 2a), chaque fibre dudit faisceau principal (9, 10) de fibres étant coupé pour produire deux extrémités venant en butée sur le plan de séparation (1a, 2a) à partir des côtés respectifs.

2. Un montage de tige de bielle selon la revendication 1, dans lequel ledit faisceau de fibres comprend un faisceau de grande extrémité (11, 12) de fibres adapté à passer dans une configuration sensiblement circulaire seulement dans ladite partie (6) de grande extrémité autour dudit trou (5) de grande extrémité dudit montage de tige de bielle comme sensiblement superposé au-dessus de ladite partie courbée de grande extrémité dudit faisceau principal (9, 10) de fibres, ledit faisceau (11, 12) de grande extrémité de fibres étant uniformément continu en configuration généralement circulaire de celui-ci, dans une partie de celui-ci où ladite configuration en forme de 8 dudit faisceau de grande extrémité de fibres traverse ledit plan de séparation (1a, 2a), chaque fibre dudit faisceau (11, 12) de grande extrémité de fibres étant coupée pour produire deux extrémité venant en butée sur le plan de séparation à partir des côtés respectifs.

3. Un montage de tige de bielle selon la revendication 1 ou 2, dans lequel lesdits faisceaux de fibres comprennent de plus un faisceau (13, 14) de petite extrémité de fibres adapté à passer dans une configuration circulaire sensiblement seulement à l'intérieur de ladite partie (7) de petite extrémité autour dudit trou (8) de petite extrémité dudit montage de tige de bielle comme sensiblement superposé au-dessus de ladite partie courbée de petite extrémité dudit faisceau principal (9, 10) de fibres.

4. Un montage de tige de bielle selon l'une quelconque des revendications 1 à 3, dans lequel ledit faisceau principal (9, 10) de fibres est fourni comme une paire de faisceaux (9, 10) de fibres de sensiblement la même configuration en forme de 8 et en configuration de séparation des fibres superposés l'un au-dessus de l'autre.

5. Un montage de tige de bielle selon l'une quelconque des revendications 2 à 4, dans lequel ledit faisceau de grande extrémité (11, 12) de fibres est fourni comme une paire de faisceaux (11, 12) de fibres de sensiblement la même configuration circulaire et de configuration en séparation superposée sur les faces opposées dudit faisceau principal (9, 10) de fibres.

6. Un montage de tige de bielle selon l'une quelconque des revendications 3 à 5, dans lequel ledit faisceau de petite extrémité (13, 14) de fibres est fourni comme une paire de faisceaux (13, 14) de fibres de sensiblement la même configuration circulaire superposée sur les faces opposées dudit faisceau principal (9, 10) de fibres.

7. Un montage de tige de bielle selon l'une quelconque des revendications 1 à 6, dans lequel ledit faisceau de fibres comprend de plus un faisceau linéaire (50, 51) de fibres adapté à passer dans une configuration droite seulement à l'intérieur de ladite partie de bras (38) dudit montage de tige de bielle comme pris en sandwich entre lesdits deux passages dudit faisceau principal (9, 10) de fibres.

8. Un montage de tige de bielle selon la revendication 7, dans lequel ledit faisceau linéaire de fibres (50, 51) est fourni comme une paire de faisceaux (50, 51) de fibres superposés l'un au-dessus de l'autre.

9. Un procédé de fabrication de montage de tige de bielle selon l'une quelconque des revendications 1 à 8, comprenant les étapes de préparer ledit faisceau (9, 14; 50, 51) de fibres et de mouler une masse de métal matrice autour dudit faisceau de fibres, ledit faisceau de fibres y étant noyé de façon à former une ébauche dudit montage de tige de bielle, caractérisé en ce que ladite deuxième demi-partie (2) de ladite partie (5) de grande extrémité est coupée de ladite première demi-partie de ladite partie (5) de grande extrémité d'un seul tenant avec ladite partie de bras (38) le long dudit plan de séparation (1a, 2a) après que ladite ébauche a été moulée.

10. Un procédé selon la revendication 9, dans lequel ledit faisceau de fibres est provisoirement monté dans un boîtier (26) qui définit une cavité de moulage (24) présentant une configuration correspondant à la configuration de ladite ébauche autour dudit faisceau de fibres avant le moulage de ladite ébauche.

# F I G. I

# F I G. 2

# FIG. 3

# FIG.4

# FIG.5

# FIG.6

2

# F I G. 7

# F I G. 8

36

35

33

34

37

# FIG. 9
## PRIOR ART

F I G. 10

F I G. 11

# F I G. 12

50 (51)

# F I G. 13

24
26
25

12

14
51
10

30
27
9
32
24
28
25
29
26
13
50
23
31
11